# FASCICULE DE BREVET EUROPEEN

(11) **EP 0 423 043 B1**
(45) Date de publication et mention de la délivrance du brevet: **22.12.1999**
(21) Numéro de dépôt: 90420428.6
(22) Date de dépôt: 03.10.1990
(51) Int. Cl.: B01D 29/15, B01D 29/23, B01D 29/27

(54) **Dispositif de filtration d'un liquide pour piscine**
Filteranlage für Schwimmbecken
Filtering device for swimmingpools

(30) Priorité: 11.10.1989 FR 8913638
(43) Date de publication de la demande: 17.04.1991
(73) Titulaire: Desjoyaux, épouse Jandros, Catherine, F-42480 La Fouillouse (FR); Desjoyaux, Pierre Louis, F-42480 La Fouillouse (FR); Desjoyaux, Jean Louis, F-42480 La Fouillouse (FR)
(72) Inventeur: Desjoyaux, épouse Jandros, Catherine, F-42480 La Fouillouse (FR); Desjoyaux, Pierre Louis, F-42480 La Fouillouse (FR); Desjoyaux, Jean Louis, F-42480 La Fouillouse (FR)
(74) Mandataire: Dupuis, François

(56) Documents cités:
- FR-A- 2 049 029
- FR-A- 2 448 928
- GB-A- 168 734
- GB-A- 2 055 254
- US-A- 2 286 434
- US-A- 3 631 987
- US-A- 4 818 398

## Description

L'invention concerne plus particulièrement la filtration de l'eau des bassins de piscines ou produits similaires.

Généralement, la filtration de l'eau d'une piscine s'effectue au moyen d'une cartouche filtrante montée en combinaison avec le système d'aspiration et de refoulement de l'eau. Cette cartouche est le plus souvent exécutée à partir d'une trame polyester préformée en accordéon et disposée radialement selon les génératrices d'un cylindre central. La base de cette cartouche est en communication avec notamment le système d'aspiration pour assurer la filtration de l'eau qui peut arriver par l'extérieur de ladite cartouche de manière à traverser ses parois.

Si les résultats obtenus au niveau de la qualité de la filtration en tant que telle peuvent être considérés comme satisfaisants, ce type de filtre présente certains inconvénients. En effet, la cartouche s'encrasse assez rapidement et il est difficile de la nettoyer. Notamment des difficultés importantes apparaissent pour retirer la cartouche compte-tenu de son poids élevé.

A noter également que dans le cas d'eaux blanches, nécessitant l'emploi de produits spéciaux pour ramener les saletés au fond de la piscine, avec ce type de cartouche, il est nécessaire de les évacuer directement sans passer par ladite cartouche. On ne peut donc retenir toutes les particules, d'ou un encrassement.

Enfin, ces cartouches filtrantes, constituent un ensemble compact d'un coût de revient relativement élevé et d'une certaine fragilité.

En outre, comme indiqué, le dispositif de filtration trouve une application pour les eaux de piscines. Dans ces conditions, le problème que se propose de résoudre l'invention est d'assurer une filtration du liquide d'une manière naturelle, par gravité, et non pas sous pression. En effet, une filtration sous pression nécessite des moyens spécifiques de mise en oeuvre qui seraient totalement inadaptés dans le cas de l'application envisagée. On peut citer par exemple le Brevet US-A-4.818.398 qui enseigne un élément filtrant disposé dans un support, lequel doit être équipé de nombreux accessoires et notamment d'un couvercle adaptable d'une manière parfaitement étanche, compte tenu des forces de pression très importantes engendrées avec ce type de filtration.

Plus particulièrement, ce brevet concerne la filtration du sable et des particules fines de l'eau qui peuvent être injectées dans les formations souterraines contenant de l'huile minérale en vue de son déplacement. Il s'agit donc bien d'une utilisation à de très hautes pressions. L'élément filtrant comprend un cylindre perforé portant un manchon tissé de forme cylindrique. L'eau qui arrive est pompée par une conduite d'entrée haute pression. Le manchon n'est pas auto-portant et doit être supporté, sur toute sa surface, compte tenu des pressions mises en jeu. Le système de filtration est donc monté sur la conduite de refoulement de la pompe à de très hautes pressions.

On peut citer également l'enseignement du brevet US-A-3.631.987 qui divulgue un dispositif de filtration de l'eau d'un bassin de piscine. Ce dispositif comprend un manchon composé d'au moins une couche d'un matériau non tissé en feutre. Ce manchon n'est pas auto-portant et nécessite l'utilisation d'un support et d'une base appuyant sur le fond d'un réservoir. Le manchon est de forme cylindrique ouverte à l'une de ses extrémités, et est disposé à l'intérieur du support d'une manière inamovible. Le fond du réservoir est accouplé à un système de refoulement de l'eau. Ainsi, l'eau est refoulée par la pompe pour traverser un premier filtre puis traverse le manchon sous pression nécessitant la présence du support. L'ensemble de filtration est donc monté au niveau de la conduite de refoulement de la pompe.

Pour résoudre, d'une manière simple, efficace et rationnelle, le problème posé d'assurer la filtration de l'eau d'une piscine, d'une manière naturelle par gravité,

Il a été conçu et mis au point un dispositif conforme aux caractéristiques de la revendication 1. Il apparaît qu'après avoir enlevé le manchon filtrant de son support, ce dernier peut être très facilement lavé. Notamment , d' une manière particulièrement avantageuse, le manchon filtrant peut être lavé à la machine.

Pour résoudre le problème posé d'améliorer encore la qualité de la filtration, le manchon filtrant est composé de plusieurs couches d'un matériau non tissé, chacune des couches ayant une structure et texture différentes pour correspondre à différents degrés de filtration.

On prévoit également que la ou les couches du manchon filtrant constituent une double paroi apte à recevoir un ou des produits de traitement.

L'invention est exposée, ci-après, plus en détail, à l'aide des dessins annexés dans lesquels :
La figure 1 est une vue en perspective d'une forme de réalisation de l'article filtrant.
La figure 2 est une vue en coupe à caractère schématique, d'un exemple de montage de l'article dans un support relié à un système d'aspiration et de refoulement de l'eau.
La figure 3 montre le montage de l'article dans un exemple d'installation de filtration.
Les figures 4 et 5 montrent différents exemples de réalisation nullement limitatifs de l'article filtrant.
Les figures 6 et 7 illustrent différents moyens de maintien et de positionnement de l'article à l'intérieur de son support.
La figure 8 est une vue en coupe montrant le montage de l'article dans son support afin que la filtration s'effectue de manière coaxiale directement par l'ouverture de la poche filtrante.

Selon l'invention, le dispositif de filtration est exécuté à partir d'un article (1) composé d'au moins une couche d'un matériau non tissé ayant des capacités de filtration. Avantageusement, l'article (1) est constitué par un feutre aiguilleté, de tout type connu et approprié et dont la texture est déterminée en fonction de la qualité de la filtration à obtenir.

Cet article filtrant (1) est convenablement monté en combinaison avec un support (2) relié à l'aspiration d'un système d'aspiration et de refoulement (3) du liquide, notamment de l'eau, de manière à retenir les impuretés et autres particules que peut contenir l'eau, au fur et à mesure de son passage, au travers du non tissé (1).

L'article filtrant (1) est conformé pour constituer une poche ou manchon, ouvert à l'une de ses extrémités (1a) et fermé à son extrémité opposée (1b).

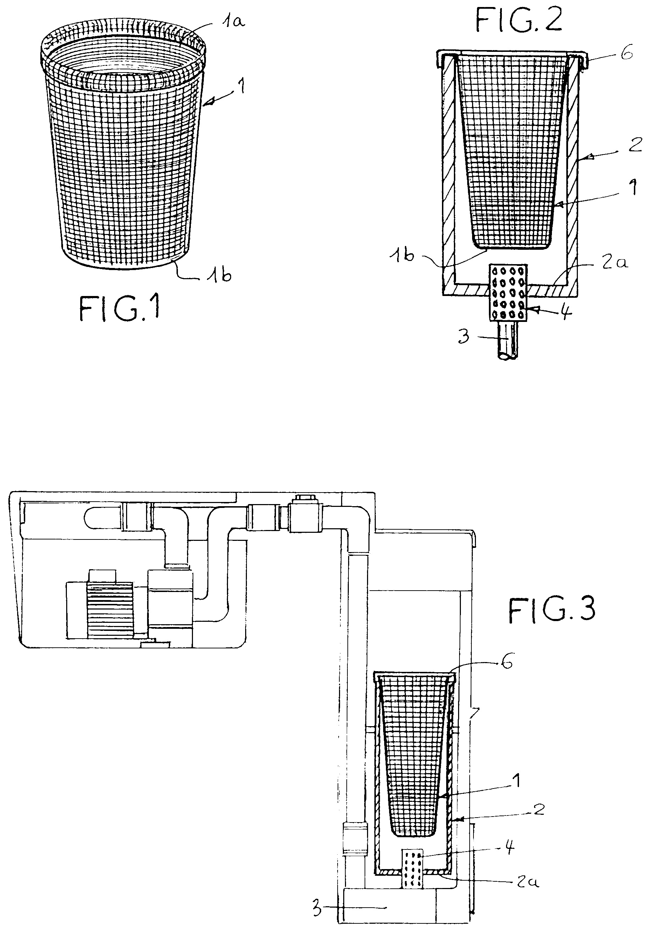

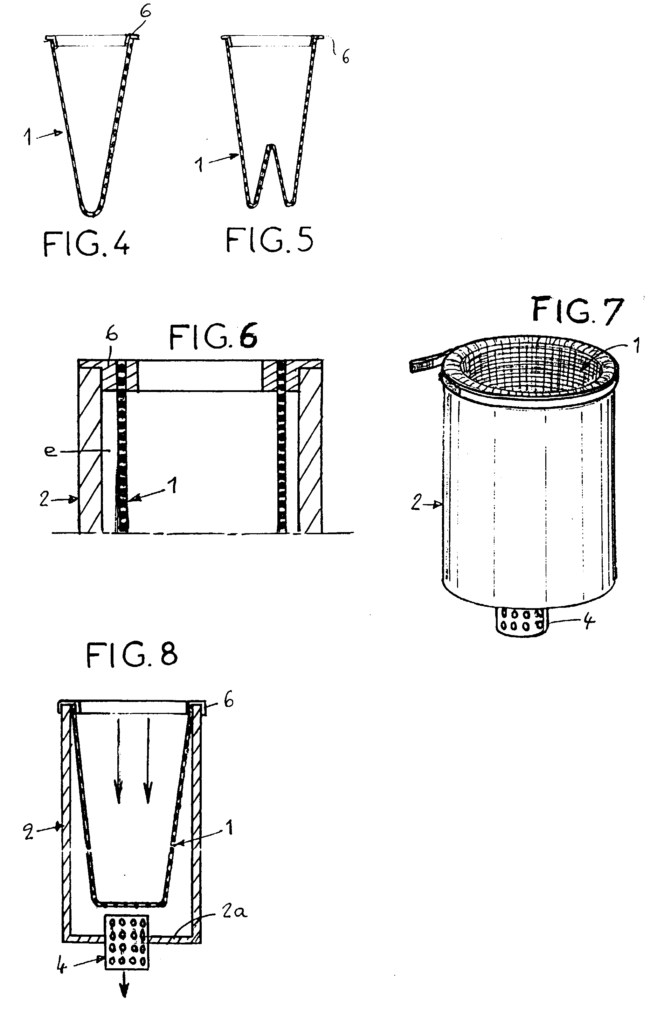

Comme le montre la figure 1, la poche filtrante (1) a une forme tronconique de section dégressive en direction de son extrémité fermée (1b). Les figures 4, 5 et 6 montrent d'autres exemples nullement limitatifs , de formes que Peut présenter la poche filtrante (1).

La conformation de l'article peut être effectuée par tout moyen connu et approprié apte à lui conférer une forme tubulaire avec une extrémité fermée.

Comme le montre notamment la figure 2, la poche filtrante (1) est disposée à l'intérieur du support (2), exécutée sous forme notamment d'un cylindre constituant un puits. Le fond (2a) de ce cylindre (2), d'une manière connue, est accouplé, par exemple, par l'intermédiaire d'une crépine (4) à l'aspiration de l'installation d'aspiration et de refoulement de l'eau (3). Quelle que soit la forme de réalisation de la poche filtrante, cette dernière est disposée à l'intérieur du support (2) avec capacité d'amovibilité.

Le manchon (1) est monté à l'intérieur du cylindre support (2) de manière à ce que la filtration s'effectue d'une manière coaxiale par le centre dudit manchon. L'eau arrive directement par l'extrémité ouverte (1a) du manchon pour être évacuée par la crépine (4), après avoir été ainsi soumise au pouvoir filtrant du manchon (1).

Avec ce mode de filtration, l'extrémité ouverte du manchon coopère avec des moyens de positionnement et de retenue (6) par rapport au cylindre support (2). Par exemple, la poche filtrante présente directement ou d'une manière rapportée au niveau de son ouverture (1a) une collerette (6) conformée pour prendre appui sur la bordure périphérique supérieure du support (2). Avantageusement, cette collerette (6) est fixée au manchon d'une manière rapportée avec des moyens appropriés pour être facilement demontable. Par exemple, la fixation de cette collerette (6) peut s'effectuer par un système de rubans complémentaires mâle - femelle du type auto-agrippant, connus sous la marque "VELCRO". Ou bien, cette fixation peut être effectuée au moyen d'une sangle.

Dans le cas où la poche filtrante à une forme cylindrique, la collerette d'appui a une section déterminée de manière à maintenir les parois de ladite poche et du support (1) selon un intervalle constant ou sensiblement constant délimitant un espace annulaire (e) de manière à ne pas altérer les qualités de la filtration.

L'article (1) peut avantageusement être composé de plusieurs couches, d'un matériau non tissé tel que défini précédemment, un feutre aiguilleté. En outre, chacune des couches peut avoir une structure différente pour correspondre à différents degrés de filtration. De même dans une autre forme de réalisation, la ou les couches de l'article peuvent constituer une double paroi apte à recevoir un ou des produits de traitement.

Les avantages ressortent bien de la description, en particulier on souligne :
- le prix de revient réduit,
- la facilité de l'entretien du filtre étant donné que la nature de ce dernier, à savoir un feutre aiguilleté, peut être facilement nettoyé, notamment lavé en machine,
- la facilité de mise en place et de retrait de la poche filtrante à l'intérieur de son support,
- la qualité et le rendement de la filtration obtenue qui s'opère d'une manière naturelle par gravité.

## Revendications

1. Dispositif de filtration de l'eau d'un bassin de piscine comprenant un système d'aspiration et de refoulement et un filtre, caractérisé en ce que :
- le filtre consiste en un manchon (1) et un support (2) constituant un puits, dont le fond est en relation avec le système d'aspiration,
- le manchon (1), ouvert à une de ses extrémités (1a) et fermé à son extrémité opposée (1b), est composé d'au moins une couche d'un matériau non tissé, sous forme d'un feutre aiguilleté, ayant des capacités de filtration,
- le manchon (1) a une forme tronconique de section dégressive en direction de son extrémité fermée (1b),
- le manchon (1) est monté à l'intérieur du puits (2) avec capacité d'amovibilité pour être facilement lavable, l'extrémité ouverte dudit manchon (1) coopérant avec des moyens de positionnement et de retenue (6) par rapport audit puits (2),
- le fond du puits (2) est accouplé au système d'aspiration afin que l'eau qui arrive directement et naturellement par gravité par l'extrémité ouverte (1a) du manchon (1), puisse être évacuée par ledit système d'aspiration et de refoulement (3), à l'intérieur du bassin de la piscine, après avoir été soumise au pouvoir filtrant dudit manchon (1).

## Claims

1. Device for filtering the water in a pool, comprising a suction and delivery system and a filter, characterized in that:
- the filter consists of a sleeve (1) and a support (2) constituting a well, the bottom of which is in communication with the suction system,
- the sleeve (1), open at one of its ends (1a) and closed at its opposite end (1b), is made of at least one layer of non-woven material in the form of a needled felt, with filtration capabilities,
- the sleeve (1) has a frustoconical shape, its cross section decreasing towards its closed end (1b),
- the sleeve (1) is mounted inside the well (2) with the ability to be removed so that it is readily washable, the open end of the said sleeve (1) collaborating with means (6) of positioning and retention with respect to the said well (2),
- the bottom of the well (2) is coupled to the suction system so that the water which arrives directly and naturally under the effect of gravity via the open end (1a) of the sleeve (1) can be removed by the said suction and delivery system (3) inside the pool, after having been subjected to the filtration capability of the said sleeve (1).

## Patentansprüche

1. Filtrationsvorrichtung für das Wasser eines Schwimmbadbeckens mit einem Ansaug- und Fördersystem und einem Filter, dadurch gekennzeichnet, daß
- der Filter aus einem Korb (1) und einer schachtbildenden Halterung (2) besteht, deren Boden mit dem Ansaugsystem in Verbindung steht,
- der an einem Ende (1a) offene und am entgegengesetzten Ende (1b) geschlossene Korb aus mindestens einer Schicht Faservliesmaterial in Form eines Nadelfilzes mit Filterkapazitäten besteht,
- der Korb (1) die Form eines Kegelstumpfs hat, dessen Querschnitt in Richtung auf das geschlossene Ende (1b) abnimmt,
- der Korb (1) abnehmbar in einem Schacht (2) angebracht ist, um leicht waschbar zu sein, wobei das offene Ende des Korbes (1) mit Positionier- und Rückhalteeinrichtungen (6) im Verhältnis zum Schacht (2) zusammenwirkt,
- der Boden des Schachtes (2) mit dem Ansaugsystem verbunden ist, damit das ankommende Wasser direkt und auf natürlichem Wege durch Schwerkraft über das offene Ende (1a) des Korbs (1) vom Ansaug- und Fördersystem (3) in das Schwimmbadbecken abgeleitet werden kann, nachdem es der Filterkraft des Korbes (1) ausgesetzt wurde.
